Europäisches Patentamt

European Patent Office

Office européen des brevets

(19)

(11) **EP 0 461 965 B1**

(12) **FASCICULE DE BREVET EUROPEEN**

(45) Date de publication et mention
de la délivrance du brevet:
**07.08.1996 Bulletin 1996/32**

(21) Numéro de dépôt: **91401490.7**

(22) Date de dépôt: **07.06.1991**

(51) Int. Cl.$^6$: **B29C 70/02**, B29B 11/16
// (B29K105/08, 105:12,
105:16)

(54) **Matériau thermoplastique renforcé estampable, son procédé de fabrication, et articles moulés obtenus à partir de ce matériau**

Verstärkte, druckumformbare thermoplastische Platte, Verfahren zur Herstellung einer solchen Platte, sowie deren Verwendung

Stampable, reinforced thermoplastic material, method of making such a material, and moulded articles produced from it

(84) Etats contractants désignés:
**AT BE DE DK ES FR GB IT NL SE**

(30) Priorité: **14.06.1990 FR 9007419**

(43) Date de publication de la demande:
**18.12.1991 Bulletin 1991/51**

(73) Titulaire: **ELF ATOCHEM S.A.**
**F-92800 Puteaux (FR)**

(72) Inventeurs:
• **Jacquemet , Régis**
**F-27300 Bernay (FR)**
• **Cognet, Gilles**
**F-27300 Bernay (FR)**

(74) Mandataire: **Foiret, Claude Serge et al**
**ELF ATOCHEM S.A.,**
**Département Propriété Industrielle,**
**La Défense 10**
**F-92091 Paris Cédex 42 (FR)**

(56) Documents cités:
**EP-A- 0 155 552**            **EP-A- 0 296 611**
**DE-A- 2 150 253**            **US-A- 2 806 509**

• **JAPANESE PATENTS GAZETTE, semaine 8544,
section Ch, accession no. 85-273774 [44],
Derwent Publications Ltd, Londres, GB; & JP-A-
60 186 554 (SEKISUI CHEM.)**

Remarques:
Le dossier contient des informations techniques
présentées postérieurement au dépôt de la
demande et ne figurant pas dans le présent
fascicule.

Printed by Rank Xerox (UK) Business Services
2.13.0/3.4

## Description

La présente invention concerne un matériau thermoplastique renforcé estampable ou TRE constitué d'une matrice à base de résine(s) thermoplastique(s) renforcée par au moins deux charges de nature et/ou de morphologie différente de part et d'autre d'un mat de verre.

Dans le brevet US 4 291 084 on a décrit un matériau thermoplastique renforcé estampable dont la matrice est à base de polyamide, de polyoléfine ou de polyester renforcée par du mica.

Dans la demande de brevet EP 296 611, est décrit un TRE dont la matrice également à base de polyamide, polyoléfine ou polyester est renforcée avec une seule charge minérale sous forme de "flocons" de diamètre moyen inférieur à 100 μm.

Des TRE dont la matrice est renforcée par une seule charge sont également décrits dans les demandes de brevet FR 2 325 504, US 4 044 188, EP 81 144.

Dans EP 155 552, est décrit un TRE dont les matrices sont renforcées par des fibres de verre d'au moins 3 mm de longueur et éventuellement des sphères creuses de granulométrie supérieure ou égale à 5 μm.

L'invention maise au point par la demanderesse consiste à renforcer la matrice thermoplastique avec au moins deux charges de nature et/ou de morphologie différente la granulométrie moyenne de chacune de ces charges étant inférieure à 80 μm. ce qui permet d'améliorer de façon notable l'aspect de surface (ondulations), les propriétés mécaniques ainsi que la stabilité dimensionnelle du TRE par rapport aux TRE connus.

La matrice du TRE selon l'invention peut contenir tout type de résines thermoplastiques seules, en mélange et/ou copolymérisées, parmi lesquelles on peut citer :

- les résines polyesters telles que le polyéthylène téréphtalate (PET), le polybutylène téréphtalate (PBT),
- les résines polyamides telles que les polyamides aliphatiques PA-6, PA-6/6, PA-11, PA-12, PA-12/12, leurs mélanges et/ou leurs copolymères
- les résines polyoléfines, seules en mélange et/ou copolymérisées telles que le polypropylène (PP), le polyéthylène (PE), le polyméthylpentène
- les résines polysulfones aromatiques, telles que le polysulfone, le polyallylsulfone
- les résines polyester polyacétal sulfones
- les résines polycarbonates
- les résines polyétherimides
- les résines polyester cétones
- les résines ABS
- les résines acryliques

Parmi les résines thermoplastiques préférées par la demanderesse, on citera tout particulièrement les résines à base de PP, PET, PBT, les mélanges ou alliages à base de PP/PA-6 ou PP/PA-6.6 et notamment ceux décrits dans la demande de brevet FR 2 629 090.

Ces résines peuvent être utilisées en tant que telles, seules, en mélange, copolymérisées, sous forme modifiée. On peut également leur incorporer divers additifs tels qu'agents anti-oxydant, anti-UV, agents retardateurs de combustibilité, plastifiants, colorants, pigments, agents antistatiques, stabilisants thermiques, etc...

Le pourcentage de résines est en général compris entre 30 et 80 % du poids total du TRE et/ou entre 53 et 90 % du volume total de TRE.

Les charges de renforcement selon l'invention peuvent être choisies parmi les charges habituellement rencontrées et sont de préférence des charges minérales.

Parmi les charges minérales, on distingue en général :

- les charges sous forme lamellaire telles que le mica, la wollastonite et les fibres de verre courtes (rapport de forme variant de 30 à 300)
- les charges sphériques ou sensiblement sphériques telles que talc, billes de verre pleines ou creuses, $CaCO_3$,

La demanderesse a remarqué qu'il était préférable de renforcer la matrice thermoplastique telle que définie ci-dessus en associant au moins deux charges de granulométrie différente mais également en associant au moins une charge sous forme lamellaire (facteur de forme variant de 30 à 300) et au moins une charge sphérique ou sensiblement sphérique.

Les charges utilisées présentent de préférence une granulométrie moyenne de 3 à 40 μm.

Le pourcentage de charges de renforcement est en général compris entre 14 et 50 % du poids total du TRE et/ou entre 6 et 40 % du volume total, et de préférence entre 27 et 35 % du volume total. La demanderesse a remarqué qu'associer au moins 2 charges minérales de renforcement permet d'augmenter les taux volumiques de charges alors que lorsqu'on utilise le mica comme seule charge de renforcement le taux volumique maximal de mica ne peut atteindre que 20 % du volume total du TRE.

L'utilisation d'un taux volumique de 20 % de mica comme seule charge de renforcement dans un TRE pose des problèmes lors de l'extrusion de la feuille de matrice (accrochage en sortie de filière, bourrelets...) et augmente les difficultés d'imprégnation du mat de verre par la matrice lors de l'élaboration des plaques TRE (demi-produit) par un procédé de lamination à chaud.

Or l'aspect de surface d'une pièce TRE est amélioré de façon notable (ondulations) pour des taux volumiques de charges minérales de 27 à 35 % qui ne peuvent être atteints qu'avec au moins 2 charges minérales. On préfère donc utiliser un pourcentage en volume supérieur ou égal à 30 % afin de réduire le retrait de(s) la résine(s) thermoplastique(s) ainsi que le retrait différentiel matrice/mat et d'améliorer l'aspect de surface de TRE.

Le mat de verre utilisé est constitué de fibres de verres dont la distribution des mèches est aléatoire dans le plan ; chacun des filaments de verre est constitué d'un ensimage qui assure l'intégrité des mèches qui sont reliées les unes aux autres par l'intermédiaire d'un liant.

A titre d'exemple de liant on peut citer les liants à base de polypropylène maléisé pour des résines à base de polypropylène.

Les mats les plus souvent rencontrés sont constitués de fibres coupées de longueur moyenne égale à environ 50 mm. On peut utiliser un mat constitué de fils ou filaments continus de type Unifilo$^R$ avec un aiguilletage, appelé dans ce cas mat aiguilleté, qui peut par exemple être obtenu selon la demande de brevet FR 2 617 208.

En général on peut utiliser un mat de masse surfacique comprise entre 225 et 900 g/m$^2$, et de préférence comprise entre 400 et 650 g/m$^2$.

Dans le cas de mat aiguilleté on considère plutôt la masse linéique qui peut varier en général entre 10 et 125 tex pour des fils qui ont un diamètre moyen de préférence compris entre 5 et 30 $\mu$m et avantageusement on utilise un mat aiguilleté de masse linéique compris entre 10 et 25 tex et de diamètre moyen compris entre 10 et 20 $\mu$m.

Le pourcentage de mat de verre au sein du TRE est en général compris entre 15 et 35 % du poids total du TRE et/ou entre 8 et 20 % en volume et de préférence entre 8 et 12 % du volume total du TRE.

Le procédé de fabrication des TRE se déroule en général selon les étapes suivantes :

On procède au compoundage des résines thermoplastiques auxquelles on incorpore les charges de renforcement et éventuellement divers additifs.

On met ensuite la résine compoundée sous forme de feuille, d'épaisseur en général comprise entre 0,3 et 1,5 mm et de préférence entre 0,5 et 0,7 mm.

Afin d'améliorer le mouillage et l'imprégnation du mat de verre et les propriétés mécaniques du TRE par la résine thermoplastique il est préférable d'utiliser un liant et de réaliser une feuille bicouche résine thermoplastique renforcée/liant par un procédé de coextrusion. Le liant est ensuite positionné du côté du mat.

On procède alors à la lamination du TRE en interposant un mat de verre entre deux feuilles de résines thermoplastiques (de préférence bicouches). On préchauffe l'ensemble par exemple par conduction à une température supérieure à la fusion de(s) résine(s) thermoplastique(s) puis on le soumet à une pression en général de l'ordre de 6 à 20 bars afin d'imprégner le mat.

On obtient ainsi une plaque TRE qui est un semi-produit que l'on peut alors transformer en articles moulés de forme plus ou moins complexe selon un procédé d'estampage connu en soi.

On régule la température du moule lors de l'estampage qui peut dépendre de la nature de(s) résine(s) thermoplastique(s) utilisée(s).

A titre indicatif, pour des résines à base de polypropylène, la température est comprise entre 50 et 110°C et pour des résines à base polyester (PET, PBT) elle est comprise entre 100 et 160°C.

Les articles moulés selon l'invention peuvent être utilisés dans de nombreux domaines.

A titre d'exemple, on peut citer des applications :

- dans le domaine automobile pour la réalisation notamment de capots, portières, renforts de pare-chocs, cachesculbuteurs, carters boîte d'embrayage, coques de sièges, supports de batterie, accoudoirs, écrans anti bruit...
- pour la réalisation d'antennes paraboliques
- pour la réalisation de valises, malettes, boîtes d'instruments de musique

Dans les exemples qui suivent, on évalue :

► les caractéristiques mécaniques des TRE en mesurant

- la résistance en flexion 3 pannes selon la norme ASTM D 790
- la résistance au choc FWI à 20°C selon la norme AFNOR NFT 51-118

► l'aspect de la surface des TRE est évalué à partir des critères de profil R, Ra, W retenus dans l'automobile française (norme E 05 015)

- R correspond à l'amplitude de la micro-rugosité du matériau (c'est-à-dire aux irrégularités géométriques telles que la distance entre 2 pics de ces irrégularités est comprise entre 0 et 500 μm) et est égal à la différence d'altitude z entre la crête maximale et le creux minimal relevée sur un pas inférieur à 500 μm.
- Ra est l'écart arithmétique moyen du profit et est calculé par :

$$Ra = \frac{1}{L} \int_0^L |z| \, dx$$

- W correspond à l'ondulation du matériau (c'est-à-dire aux irrégularités géométriques telles que la distance entre 2 pics de ces irrégularités est comprise entre 500 et 2 500 μm) et est égal à la différence d'altitude entre la crête maximale et le creux minimal relevé entre 500 et 2 500 μm.

Les exemples illustrent l'invention sans toutefois la limiter.

## EXEMPLE 1

Dans un Ko-malaxeur BUSS monovis, on procède au compoundage d'une résine thermoplastique à base de PP et de une ou plusieurs charges de renforcement après avoir procédé à un pré-mélange des constituants à sec au tonneau. La température du malaxeur est régulée à 200°C.

La résine thermoplastique est un PP de melt index (MI) = 12 mesuré selon la norme ASTM D 1239 (à 230°C sous 2,16 kg).

Selon les échantillons A à F on ajoute une ou plusieurs charges de renforcement (mica, billes de verre creuses ($BV_c$), $CaCO_3$) dans des proportions indiquées dans le Tableau 1.

Le mica utilisé a une granulométrie moyenne de 30 à 40 μm avec un facteur de forme de 30-50.

Les $BV_c$ utilisées ont une densité de 0,6 et une granulométrie moyenne de 30 à 40 μm.

Le $CaCO_3$ utilisé a une granulométrie moyenne de 1,1 μm. Une fois compoundée la matrice des échantillons A à F est ensuite coextrudée avec un liant à base de PP maléisé (MI = 4 à 230°C sous 2,16 kg ; taux pondéral de maléisation : 1 500 ppm) dans une extrudeuse SAMAFOR 60/28 D.

On obtient une feuille bicouche dont l'épaisseur de la couche de résine est égale à 0,65 mm et l'épaisseur de la couche de liant égale à 0,1 mm.

On procède ensuite au laminage d'un ensemble constitué de 2 feuilles bicouches précédemment décrites entre lesquelles on interpose un mat de verre aiguilleté du côté de la couche de liant. Le mat aiguilleté (masse surfacique : 600 g/m$^2$ ; masse linéique : 25 tex) est préparé selon le procédé de la demande FR 2 617 208 avec les conditions d'aiguilletage suivantes :

| - vitesse d'avance du mat | 1,1 m/mn |
|---|---|
| - profondeur de pénétration des aiguilles | 26 mm |
| - nombre de coups/cm$^2$ | 11 |
| - vitesse de frappe | 150 coups/mn |

L'ensemble est préchauffé par conduction entre les plateaux d'une presse à 220°C pendant 3 mn sous une pression de 1 bar puis comprimé à la même température sous 6 bars pendant 30 s.

La plaque TRE ainsi obtenue a une épaisseur égale à 3,6 mm.

La plaque TRE est ensuite découpée puis préchauffée par conduction entre les plateaux d'une presse de 225°C et placée dans un moule circulaire plan de 400 mm de diamètre dont la température est régulée à 110°C où la pièce est maintenue pendant 2 mn sous une pression de 200 bars.

On mesure pour les pièces TRE des échantillons A à F leurs propriétés mécaniques et détermine leur aspect de surface tel qu'indiqué plus haut ainsi que pour une pièce réalisée uniquement avec la matrice (composition identique) de l'échantillon F qui sert de référence du point de vue de l'aspect de surface (échantillon G).

Les résultats sont réunis dans le Tableau 1.

### EXEMPLE 2

On réalise des pièces TRE dont la résine thermoplastique est à base de polypropylène de MI = 40 dans les mêmes conditions que décrites dans l'Exemple 1.

La résine thermoplastique est renforcée avec plusieurs agents de renforcement : le mica et les $BV_c$ ont les mêmes caractéristiques que ceux de l'Exemple 1.

Les billes de verre pleines ($BV_p$) utilisées ont une granulométrie moyenne de 15 à 20 $\mu$m.

Le talc utilisé a une granulométrie moyenne de 3 à 5 $\mu$m.

La pièce 2A est réalisée à partir d'un mat aiguilleté (masse surfacique 600 g/m$^2$ ; masse linéique 25 tex) et la pièce 2B à partir d'un mat aiguilleté (masse surfacique 450 g/m$^2$ ; masse linéique : 25 tex).

On mesure les propriétés mécaniques et évalue l'aspect de surface pour les pièces des échantillons A et B; les résultats sont réunis dans le Tableau 1.

### EXEMPLE 3

Dans un Ko-malaxeur BUSS monovis, on procède au compoundage d'une résine thermoplastique à base de PET et de plusieurs charges de renforcement après avoir procédé à un pré-mélange des constituants à sec au tonneau. La température du malaxeur est régulée à 280°C.

La résine thermoplastique est un PET de viscosité intrinsèque égale à 0,81 (mesurée pour 150 g de PET dans 30 g d'acide dichloroacétique).

Une fois compoundée, la résine est extrudée sous forme de film monocouche d'épaisseur égale à 0,6 mm.

On procède ensuite au laminage d'un ensemble constitué de 2 feuilles monocouches précédemment décrites entre lesquelles on interpose un mat de verre aiguilleté (masse linéique : 25 tex ; masse surfacique : 450 g/m$^2$) est préparé dans des mêmes conditions que le mat de l'exemple 1.

L'ensemble est préchauffé par conduction entre les plateaux d'une presse à 270°C pendant 4 mn sous une pression de 1 bar puis comprimé à la même température sous 6 bars pendant 30 s.

La plaque TRE est ensuite découpée puis préchauffée par conduction entre les plateaux d'une presse à 270°C et enfin placée dans un moule circulaire plan de 400 mm de diamètre dont la température est régulée à 150°C où la pièce est maintenue pendant 2 mn sous une pression de 200 bars.

On mesure les propriétés mécaniques et évalue l'aspect de surface pour les pièces TRE obtenus ; les résultats figurent dans le Tableau 1.

## TABLEAU 1

| EXEMPLE | COMPOSITION | | | | FLEXION | | CHOC FWI | ASPECT DE SURFACE | | |
|---|---|---|---|---|---|---|---|---|---|---|
| | Matrice | | Composite TRE | | | | | | | |
| | RESINE | CONSTITUANTS DE LA MATRICE en poids | % CHARGES MINERALES en volume | % MAT DE VERRE en volume | E(MPa) | σr(MPa) | ET(J) | R (μm) | Ra (μm) | W (μm) |
| 1.A COMPA | PP (MI=12) | 100 % PP | 0 | 11,6 | 3466 | 117 | 11,8 | 1,6 | 2,3 | 16 |
| 1.B COMPA | | 80 % PP 20 % mica | 6 % mica | 11,6 | 4290 | 107 | 9,5 | 0,9 | 2,23 | 16 |
| 1.C COMPA | | 50 % PP 50 % mica | 18,6 % mica | 11,6 | 6845 | 114 | 11 | 0,8 | 1,3 | 12 |
| 1.D COMPA | | 80 % PP 20 % BVc | 21 % BVc | 11,6 | 3190 | 70 | 10,5 | 1,1 | 2 | 12 |
| 1.E | | 60 % PP 20 % mica 20 % CaCO$_3$ | 6,7% mica 7 % CaCO$_3$ | 11,6 | 5480 | 99 | 10,5 | 1 | 1,7 | 15 |
| 1.F | | 60 % PP 20 % mica 20 % BVc | 5,1% mica 23,9% BVc | 11,6 | 4506 | 89 | 9 | 1,1 | 1,2 | 8 |
| 1.G REF | | 60 % PP 20 % mica 20 % BVc | 6,6% mica 31,2% BVc | 0 | 3500 | 32 | 1,5 | 0,8 | 0,5 | 3 |

EP 0 461 965 B1

| EXEMPLE | COMPOSITION | | | | FLEXION | | CHOC FWI | ASPECT DE SURFACE | | |
|---------|-------------|---|---|---|---------|---|----------|-------------------|---|---|
| | Matrice | | Composite TRE | | | | | | | |
| | RESINE | CONSTITUANTS DE LA MATRICE en poids | % CHARGES MINERALES en volume | % MAT DE VERRE en volume | E(MPa) | σr(MPa) | ET(J) | R (μm) | Ra (μm) | W (μm) |
| 2.A | PP (MI=40) | 60 % PP<br>20 % mica<br>20 % BVp | 6,7% mica<br>7 % BVp | 11,6 | 5183 | 93 | 12 | 1,7 | 1,8 | 12 |
| 2.B | | 35 % PP<br>20 % mica<br>30 % BVp<br>10 % talc<br>5 % BVc | 7,9% mica<br>13,1% BVp<br>9,3% BVc<br>4 % talc | 10,2 | 5380 | 77 | 9,6 | 1,1 | 1,3 | 10 |
| 3.A | PET | 55 % PET<br>20 % mica<br>20 % BVp<br>5 % BVc | 9,7% mica<br>10,8% BVp<br>11,5% BVc | 12,4 | 9651 | 108 | 11,4 | 1,2 | 0,9 | 12,5 |

**Revendications**

1. Matériau thermoplastique renforcé estampable (TRE) comprenant un mat de verre interposée entre deux matrices à base de résines thermoplastiques sous forme de feuilles monocouches, ou bi-couches matrice/liant, contenant au moins deux charges de renforcement de natures différentes, caractérisé en ce que la granulométrie moyenne de chacune desdites charges est inférieure à 80 μm, et de préférence comprise entre 3 et 40 μm.

2. Matériau selon la revendication 1, caractérisé en ce que au moins une charge de renforcement desdites matrices possède une morphologie sphérique ou sensiblement sphérique et au moins une charge possède une morphologie lamellaire.

3. Matériau selon la revendication 1 ou 2, caractérisé en ce qu'au moins deux charges de renforcement sont de granulométrie différente.

4. Matériau selon l'une quelconque des revendications 1 à 3, caractérisé en ce que les résines thermoplastiques représentent de 30 à 80 % du poids total du TRE et/ou de 53 à 90 % du volume total du TRE.

5. Matériau selon l'une quelconque des revendications 1 à 4, caractérisé en ce que les charges de renforcement représentent de 14 à 50 % du poids total du TRE et/ou de 27 à 35 % en volume et de préférence au moins 30 % du volume total du TRE.

6. Matériau selon l'une quelconque des revendications 1 à 5, caractérisé en ce que le mat de verre représente de 15 à 35 % du poids total du TRE et/ou de 8 à 20 % en volume et de préférence de 8 à 12 % du volume total du TRE.

7. Matériau selon l'une quelconque des revendications 1 à 6, caractérisé en ce que les résines thermoplastiques sont choisies parmi :

   • les résines polyesters telles que le polyéthylène téréphtalate (PET), le polybutylène téréphtalate (PBT),
   • les résines polyamides telles que les polyamides alphatiques PA-6, PA-6,6, PA-11, PA-12, PA-12,12, leurs mélanges et/ou leurs copolymères,
   • les résines polyoléfines, seules en mélange et/ou copolymérisées telles que le polypropylène (PP), le polyéthylène (PE), le polyméthylpentène,
   • les résines polysulfones aromatiques, telles que le polysulfone, le polyallysulfone,
   • les résines polyester polyacétal sulfones,
   • les résines polycarbonates
   • les résines polyétherimides,
   • les résines polyester cétones,
   • les résines ABS,
   • les résines acryliques

   et de préférence parmi les résines à base de PP, PET, PBT, les mélanges ou alliages à base de PP/PA-6 ou PP/PA-6,6.

8. Matériau selon l'une quelconque des revendications 1 à 7, caractérisé en ce que le mat de verre est aiguilleté et a une masse surfacique comprise entre 225 et 900 g/m$^2$.

9. Procédé de fabrication d'un TRE tel que défini dans l'une quelconque des revendications 1 à 8, selon lequel :

   a) on compounde la matrice à base de résines thermoplastiques et d'au moins deux charges de renforcement de natures différentes, chacune desdites charges ayant une granulométrie moyenne inférieure à 80 μ,
   b) on extrude la matrice sous forme de feuille monocouche, on co-extrude la matrice avec un liant sous forme de feuille bi-couche,
   c) on interpose un mat de verre entre deux feuilles telles que décrites sous b), du côté de la couche de liant pour les feuilles bi-couches, et lamine l'ensemble à une température supérieure à la température de fusion des résines thermoplastiques sous pression.

10. Articles et pièces moulés obtenus par estampage de matériaux tels que définis dans l'une quelconque des revendications 1 à 8.

**Claims**

1. Reinforced thermoplastic formable material (RTF) comprising a glass mat interposed between two matrices based on thermoplastic resins in the form of single-ply or two-ply matrix/binder sheets containing at least two reinforcing fillers of different kinds, characterized in that the mean particle size of each of the said fillers is smaller than 80 µm, and preferably between 3 and 40 µm.

2. Material according to Claim 1, characterized in that at least one reinforcing filler of the said matrices has a spherical or substantially spherical morphology and at least one filler has a lamellar morphology.

3. Material according to Claim 1 or 2, characterized in that at least two reinforcing fillers are of different particle size.

4. Material according to any one of Claims 1 to 3, characterized in that the thermoplastic resins represent from 30 to 80 % of the total weight of the RTF and/or from 53 to 90 % of the total volume of the RTF.

5. Material according to any one of Claims 1 to 4, characterized in that the reinforcing fillers represent from 14 to 50 % of the total weight of the RTF and/or from 27 to 35 % by volume and preferably at least 30 % of the total volume of the RTF.

6. Material according to any one of Claims 1 to 5, characterized in that the glass mat represents from 15 to 35 % of the total weight of the RTF and/or from 8 to 20 % by volume and preferably from 8 to 12 % of the total volume of the RTF.

7. Material according to any one of Claims 1 to 6, characterized in that the thermoplastic resins are chosen from:

    - polyester resins such as polyethylene terephthalate (PET) and polybutylene terephthalate (PBT),
    - polyamide resins such as the aliphatic polyamides PA-6, PA-6,6, PA-11, PA-12, PA-12,12, their mixtures and/or their copolymers,
    - polyolefin resins, by themselves, mixed and/or copolymerized, such as polypropylene (PP), polyethylene (PE) and polymethylpentene,
    - aromatic polysulphone resins such as polysulphone and polyallyl sulphone,
    - polyester polyacetal sulphone resins,
    - polycarbonate resins
    - polyetherimide resins,
    - polyesterketone resins,
    - ABS resins,
    - acrylic resins

    and preferably from resins based on PP, PET, PBT and mixtures or alloys based on PP/PA-6 or PP/PA-6,6.

8. Material according to any one of Claims 1 to 7, characterized in that the glass mat is needled and has a mass per unit area of between 225 and 900 g/m$^2$.

9. Process for the manufacture of an RTF as defined in any one of Claims 1 to 8, according to which:

    a) the matrix based on thermoplastic resins and on at least two reinforcing fillers of different kinds, each of the said fillers having a mean particle size smaller then 80 µm, is compounded,
    b) the matrix is extruded in single-ply sheet form or is coextruded with a binder in two-ply sheet form,
    c) a glass mat is interposed between two sheets as described under b), on the binder layer side in the case of two-ply sheets, and the whole is laminated at a temperature above the melting temperature of the thermoplastic resins under pressure.

10. Articles and moulded items obtained by forming materials as defined in any one of Claims 1 to 8.

**Patentansprüche**

1. Druckumformbares verstärktes thermoplastisches Material (DVT-Material), das eine Glasmatte enthält, die zwischen zwei Matrices auf der Basis thermoplastischer Harze in Form von einlagigen Folien oder zweilagigen Matrix/Bindemittel-Folien eingefügt ist, die mindestens zwei verstärkende Füllstoffe unterschiedlicher Art enthalten,
dadurch gekennzeichnet, daß
die mittlere Korngröße jedes verstärkenden Füllstoffs kleiner als 80 µm ist und vorzugsweise im Bereich von 3 bis 40 µm liegt.

2. Material nach Anspruch 1,
dadurch gekennzeichnet, daß
mindestens ein verstärkender Füllstoff zur Verstärkung der Matrices eine kugelförmige oder im wesentlichen kugelförmige Morphologie und mindestens ein verstärkender Füllstoff eine lamellenförmige Morphologie aufweist.

3. Material nach Anspruch 1 oder 2,
dadurch gekennzeichnet, daß
mindestens zwei verstärkende Füllstoffe eine unterschiedliche Korngröße aufweisen.

4. Material nach einem der Ansprüche 1 bis 3,
dadurch gekennzeichnet, daß
die thermoplastischen Harze 30 bis 80 % des Gesamtgewichts des DVT-Materials und/oder 53 bis 90 % des Gesamtvolumens des DVT-Materials ausmachen.

5. Material nach einem der Ansprüche 1 bis 4,
dadurch gekennzeichnet, daß
die verstärkenden Füllstoffe 14 bis 50 Gew.-% des Gesamtgewichts des DVT-Materials und/oder 27 bis 35 Vol.-% und vorzugsweise mindestens 30 Vol.-% des Gesamtvolumens des DVT-Materials ausmachen.

6. Material nach einem der Ansprüche 1 bis 5,
dadurch gekennzeichnet, daß
die Glasmatte 15 bis 35 Gew.-% des Gesamtgewichts des DVT-Materials und/oder 8 bis 20 Vol.-% und vorzugsweise 8 bis 12 Vol.-% des Gesamtvolumens des DVT-Materials ausmacht.

7. Material nach einem der Ansprüche 1 bis 6,
dadurch gekennzeichnet, daß
die thermoplastischen Harze ausgewählt sind unter:

-   Polyesterharzen, wie z.B. Polyethylenterephthalat (PET) und Polybutylenterephthalat (PBT),
-   Polyamidharzen, wie z.B. den aliphatischen Polyamiden PA 6, PA 6,6, PA 11, PA 12, PA 12,12, deren Gemischen und/oder deren Copolymeren,
-   Polyolefinharzen, einzeln in einem Gemisch und/oder copolymerisiert, wie z.B. Polypropylen (PP), Polyethylen (PE) und Polymethylpenten,
-   aromatischen Polysulfonharzen, wie z.B. Polysulfonen und Polyallylsulfon,
-   Polyesterpolyacetalsulfonharzen,
-   Polycarbonatharzen,
-   Polyetherimidharzen,
-   Polyesterketonharzen,
-   ABS-Harzen,
-   Acrylharzen

und vorzugsweise unter Harzen auf PP-, PET-, PBT-Basis und Gemischen oder Polymerlegierungen auf der Basis von PP/PA 6 oder PP/PA 6,6.

8. Material nach einem der Ansprüche 1 bis 7,
dadurch gekennzeichnet, daß
die Glasmatte genadelt ist und ein Flächengewicht von 225 bis 900 g/m$^2$ aufweist.

9. Verfahren zur Herstellung eines DVT-Materials nach einem der Ansprüche 1 bis 8, das folgende Schritte umfaßt:

a) Compoundieren der Matrix auf der Basis thermoplastischer Harze und von mindestens zwei verstärkenden Füllstoffen unterschiedlicher Art, von denen jeder eine mittlere Korngröße unter 80 µm aufweist,
b) Extrudieren der Matrix in Form einer einlagigen Folie oder Coextrudieren der Matrix mit einem Bindemittel in Form einer zweilagigen Folie,

c) Einfügen einer Glasmatte zwischen zwei der unter b) beschriebenen Folien, und zwar im Falle zweilagiger Folien auf der Seite der Bindemittelschicht, und Laminieren des Ganzen bei einer Temperatur oberhalb der Schmelztemperatur der thermoplastischen Harze unter Druck.

10. Geformte Gegenstände und Teile, die durch Druckumformung der Materialien nach einem der Ansprüche 1 bis 8 hergestellt sind.